# EUROPEAN PATENT SPECIFICATION

(11) **EP 2 992 186 B1**
(45) Date of publication and mention of the grant of the patent: **09.09.2020**
(21) Application number: 14721356.5
(22) Date of filing: 30.04.2014
(51) Int. Cl.: F01D 25/28, F02C 7/04

(54) **COMPOSITE MATERIAL INLET PLENUM AND GAS TURBINE ENGINE SYSTEM COMPRISING SAID PLENUM**
ANSAUGKAMMER AUS VERBUNDWERKSTOFF UND GASTURBINENMOTORSYSTEM MIT DIESER ANSAUGKAMMER
CAISSON DE DISTRIBUTION D'ENTRÉE EN MATÉRIAU COMPOSITE ET SYSTÈME DE MOTEUR DE TURBINE À GAZ COMPRENANT LE CAISSON DE DISTRIBUTION

(30) Priority: 03.05.2013 IT FI20130100
(43) Date of publication of application: 09.03.2016
(73) Proprietor: Nuovo Pignone S.r.l., 50127 Florence (IT)
(72) Inventor: MERLO, Roberto, I-50127 Florence (IT); PECCHIOLI, Mario, I-50127 Florence (IT); MORRIELLO, Pierenzo, I-50127 Florence (IT)
(74) Representative: BRP Renaud & Partner mbB Rechtsanwälte Patentanwälte Steuerberater
(86) International application number: PCT/EP2014/058916
(87) International publication number: WO 2014/177658

(56) References cited:
- EP-A1- 2 116 728
- JP-U- H0 552 235
- US-A- 3 751 907
- US-A1- 2010 095 683
- US-A1- 2010 124 494

## Description

### TECHNICAL FIELD

The present disclosure relates to gas turbine engines. More specifically, the disclosure relates to improvements concerning the manufacturing of the inlet plenum for gas turbine systems.

### BACKGROUND ART

EP 2 116 728 A1 and US 2010/095683 A1 respectively disclose a gas intake assembly incorporated into an industrial gas turbine. The gas intake assembly helps to guide gas into a compressor of the gas turbine and also helps in supporting the rotor bearings. US 2010/095683 A1 is also concerned with the servicing of such gas turbines.

Gas turbine engines are used as a power source within a variety of applications. Gas turbine engines are used, for example, as prime movers in compression stations, for driving large turbo-compressors for pipeline applications, for processing refrigerating fluids in LNG systems and the like. Gas turbine engines are also used as prime movers for driving electric generators.

Gas turbine engines are usually arranged on a base plate surrounded by an enclosure protecting the gas turbine engine and instrumentalities thereof from the environment. A filter arrangement is provided at the inlet of the gas turbine system for filtering air ingested by the compressor of the gas turbine engine. The filtered air is delivered to the inlet of the air compressor through an inlet plenum. Compressed air is then delivered to a combustor, mixed with liquid or gaseous fuel and the mixture is ignited to produce compressed combustion gases which are expanded in one or more turbines to generate power. Part of the power is used to drive the compressor and surplus power is made available on a load coupling for driving a load connected to the gas turbine engine.

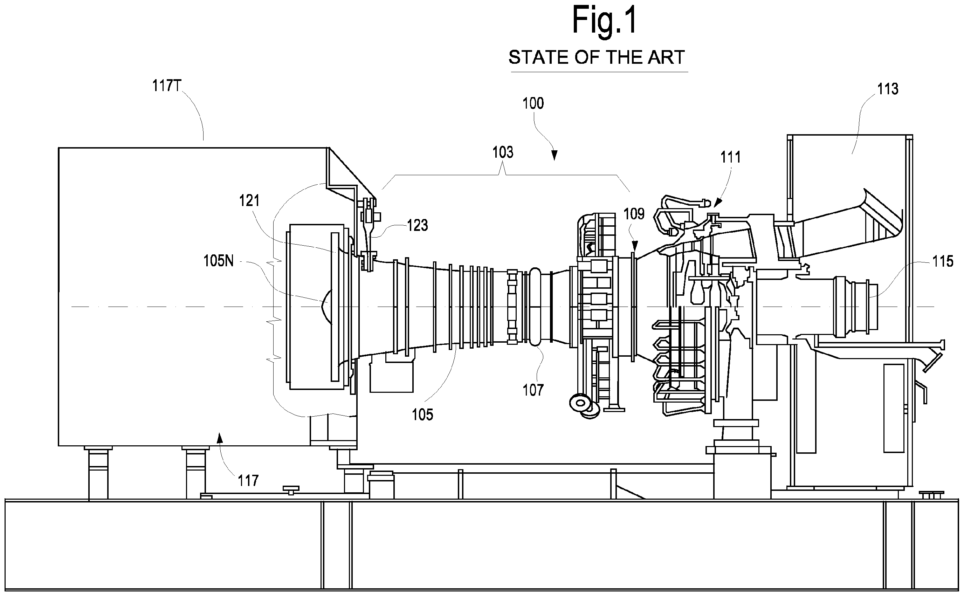

Fig.1 illustrates a gas turbine engine using an air derivative gas turbine and having a current art air inlet plenum arrangement at the cold end of the gas turbine engine.

The gas turbine engine 100 comprises a gas generator 103 in turn comprised of an air compressor 105, a combustor 107 and a high pressure turbine 109. Downstream from the high pressure turbine 109 a power turbine or low pressure turbine 111 is arranged. Exhaust combustion gases are discharged through an exhaust plenum 113 and a stack (not shown). A load coupling 115 extends through the exhaust plenum and drives a load (not shown). At the cold end of the gas turbine engine 100 an air inlet plenum 117 is connected to an annular inlet 121 of the air compressor 105. The air inlet plenum 117 is usually comprised of a box-shaped structure made of steel. The top of the air inlet plenum 117, shown at 117T in Fig.1 is connected to a clean air delivery duct (not shown), which is in turn connected to a silencer arrangement and a filter system for cleaning the environment air ingested by the air compressor 105. In some known embodiments, the gas generator 103 is supported by the air inlet plenum 117 through a support 123.

In some known embodiments, the air inlet plenum 117 provides for an axial inlet flow, i.e. the interior of the air inlet plenum 117 is shaped so as to generate an axially oriented air flow, which enters the compressor annular inlet 121. The axial flow arrangement is usually provided when air derivative gas turbines are used, which are provided with a compressor nose 105N. The interior of the air inlet plenum 117 is therefore empty in front of the air compressor nose 105N, allowing a free air flow from the air inlet 117T through the compressor inlet 121.

Known air inlet plenum structures are particularly heavy and cumbersome. When the gas generator 103 of the gas turbine engine 100 has to be removed, for example for replacement purposes or maintenance, complex operations must be carried out to dismantle at least partly of the air inlet plenum 117.

There is therefore a need for an improved air inlet plenum structure which at least partly solves or alleviates the drawbacks of the known in air inlet plenum structures.

### SUMMARY OF THE INVENTION

The present invention is defined in the accompanying claims.

The subject matter disclosed herein particularly refers to an air inlet plenum for a gas turbine system, wherein the air inlet plenum is made mainly of fiber-reinforced plastic composite material. The composite material structure makes the air inlet plenum less expensive and extremely light. Moreover, the air inlet plenum has removable portions, which can easily be detached from a main body of the air inlet plenum, to simplify removal of part of the turbomachines forming the gas turbine engine, for example the gas generator or the air compressor.

While current art air inlet plenums made of stainless steel may have a weight in the range of several tons, e.g. between 4000 and 5000 kg, a corresponding air inlet plenum made of glass fiber-reinforced plastic composite can weigh less than 1000 kg, e.g. between 500 and 700 kg. The removable portions of the air inlet plenum, being made of composite material as well, have a reduced weight which makes removal thereof easy, involving a limited amount of labor, so that maintenance operations requiring removal of turbomachine components are made quicker, safer and less invasive than when current art air inlet plenums are used.

Thus, according to some embodiments, the subject matter disclosed herein relates to an air inlet plenum for a gas turbine engine, comprising: a hollow body having an air inlet aperture and an air outlet aperture arranged and configured for connection to the gas turbine engine; at least one removable portion, which is removable from the hollow body when the air inlet plenum is connected to a gas turbine engine; wherein the air inlet plenum is at least partly made of fiber-reinforced plastic.

In particularly advantageous embodiments the removable portion of the air inlet plenum can have a weight of 40 kg or less and preferably of 20 kg or less.

According to particularly useful embodiments, said at least one removable portion of the air inlet plenum is a portion of a connection flange, which surrounds an air outlet aperture and which provides a connection between the main body of the air inlet plenum and the inlet of the compressor of the gas turbine engine.

In currently preferred embodiments, the connection flange is comprised of two opposite removable portions, so that removal of the compressor and/or other turbomachine components of the gas turbine engine can be performed selectively on either one or the other of two sides of the gas turbine system, depending upon the system layout. In some embodiments the connection flange is formed by two preferably substantially symmetrical parts, each removable from the main body of the air inlet plenum.

The composite material air inlet plenum disclosed herein can be designed for axial air inlet or radial air inlet gas turbine engines. Use of the air inlet plenum disclosed herein in an axial airflow design is particularly useful, since it allows reducing the dimension of the air inlet plenum in the axial direction. As a matter of fact, using a composite material allows the inner surface of the air inlet plenum to be shaped so as to form an air-flow guiding surface, for instance an inner surface which has as smooth curvature from an air inlet aperture towards an air outlet aperture of the hollow body of the air inlet plenum. The guiding curved surface reduces turbulence in the air-flow and makes it possible to design the inner volume of the air inlet plenum substantially smaller than in current-art air inlet plenums, which have a substantially square cross-section and wherein a rather extensive axial direction is required to obtain a sufficiently smooth air-flow at the inlet of the air compressor.

According to a further aspect, the subject matter disclosed herein relates to a gas turbine engine system comprising: a gas turbine engine, and an air inlet plenum; wherein the air inlet plenum has an air outlet aperture arranged and configured for connection to the gas turbine engine and an air inlet aperture; wherein at least one portion of the air inlet plenum is removable when the air inlet plenum is connected to the gas turbine engine; and wherein the air inlet plenum is at least partly made of fiber-reinforced plastic.

Features and embodiments are disclosed here below and are further set forth in the appended claims. The above brief description sets forth features of the various embodiments of the present invention in order that the detailed description that follows may be better understood and in order that the present contributions to the art may be better appreciated. There are, of course, other features of the invention that will be described hereinafter and which will be set forth in the appended claims. In this respect, before explaining several embodiments of the invention in detail, it is understood that the various embodiments of the invention are not limited in their application to the details of the construction and to the arrangements of the components set forth in the following description or illustrated in the drawings. The invention is capable of being practiced and carried out in various ways. Also, it is to be understood that the phraseology and terminology employed herein are for the purpose of description and should not be regarded as limiting.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig. 1 illustrates a gas turbine arrangement with an inlet plenum according to the current art;
Fig.2 illustrates a side and partial sectional view of a gas turbine arrangement according to one exemplary embodiment of the present disclosure;
Figs 3 and 4 illustrate axonometric views of an inlet plenum according to an exemplary embodiment;
Fig.5 illustrates a detail of the connection flange of the inlet plenum;
Fig.6 illustrates an enlargement of Fig.5;
Figs. 7 to 10 illustrate a sequence for removal of the gas generator.

### DETAILED DESCRIPTION OF EMBODIMENTS OF THE INVENTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s).

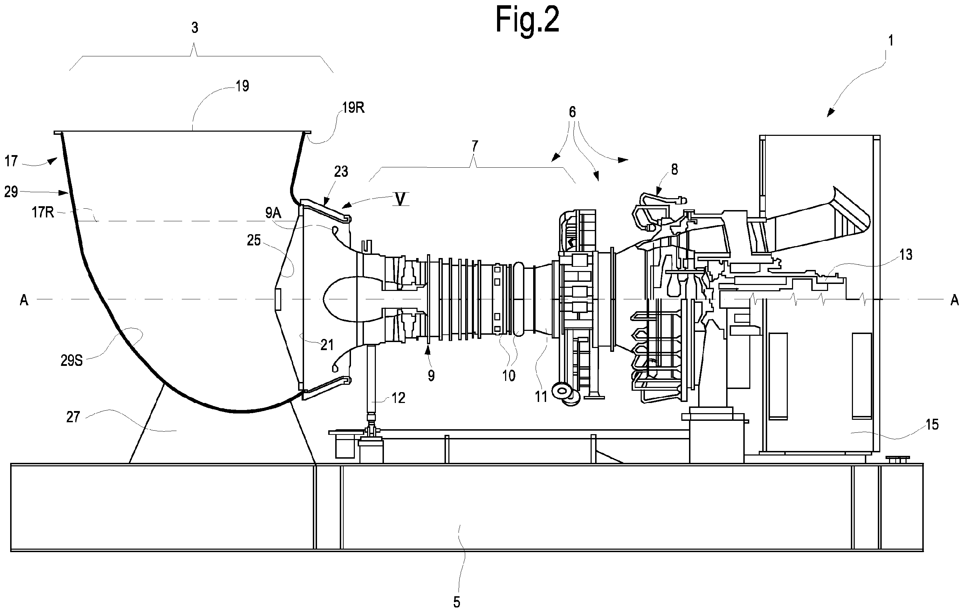

Fig.2 illustrates a schematic side view of a gas turbine engine system 1 comprised of an air inlet plenum 3. The gas turbine engine system 1 further comprises a base plate 5, whereon the turbomachines are supported. In some embodiments the gas turbine engine system can comprise an aeroderivative gas turbine engine globally labeled 6. The gas turbine engine 6 can be comprised of a gas generator 7 and a power turbine or low pressure turbine 8. The gas generator 7 is in turn comprised of an air compressor 9, a combustor 10 and a high pressure turbine 11.

The cold end of the gas turbine engine 6 can be supported by the base plate 5 through supporting struts 12 arranged underneath the inlet side of the air compressor 9, so that the weight of the gas turbine engine is directly supported by the base plate 5 rather than by the air inlet plenum 3 as in some embodiments according to current art (of the Fig.1).

Air ingested by the air compressor 9 is mixed with fuel in the combustor 10, the air-fuel mixture is ignited and the high-temperature, high-pressure combustion gases thus generated are expanded sequentially in the high pressure turbine 11 and in the low pressure turbine or power turbine 8. Power available on the shaft of the power turbine 8 is used to drive a load (not shown) through a load coupling 13. Exhausted combustion gases are discharged through an exhaust plenum 15.

The gas generator 7 can be, for example, a LM2500, LM2500+, LM2500+G4 gas generators available from General Electric AE, USA. Suitable power turbines 8 can be GE Oil & Gas / Nuovo Pignone PGT25/PGT25+ Gas Turbines. Further Suitable power turbines can be DR-61 and VECTRA® 40G power turbines available from Dresser Rand, USA.

According to some embodiments, the air compressor 9 is comprised of an annular inlet 9A which is fluidly connected to the air inlet plenum 3.

The air inlet plenum 3 can be comprised of a hollow body 17 having an air inlet aperture 19. The air inlet aperture 19 can be connected to a clean-air delivery duct (not shown) in turn connected to a silencer arrangement and a filter system, through which the air is delivered before being ingested by the air compressor 9.

According to some embodiments, the top portion of the hollow body 17, where the air inlet aperture 19 is located, has a square or rectangular shape. The air inlet aperture 19 can be surrounded by a rim 19R.

The hollow body 17 of the air inlet plenum 3 is further comprised of an air outlet aperture 21 and a connection flange 23 surrounding the air outlet aperture 21 and establishing a connection between the hollow body 17 of the air inlet plenum 3 and the annular inlet 9A of the air compressor 9. In some embodiments the air outlet aperture 21 of the hollow body 17 is circular in shape. The connection flange 23 can be substantially frustum-conical.

Upstream from the air outlet aperture 21 a filter or mesh 25, for example conical in shape, can be arranged, for preventing extraneous matter from entering the air compressor 9.

In some embodiments, the air inlet plenum 3 is supported by supporting legs 27 on the base plate 5 of the gas turbine engine system 1. In other embodiments, the air inlet plenum 3 can be mounted on a separate baseplate directly on foundations whereon the baseplate 5 is placed.

In some embodiments, the hollow body 17 comprises a side wall 29 opposite the air outlet aperture 21, which extends from the rim 19R downwards to the bottom of the hollow body 17, forming a curved surface 29S extending down to the air outlet aperture 21. The surface 29S of the side wall 29 forms an air guiding surface, which generates a smooth airflow in an axial direction entering the inlet of the air compressor 9 in an axial direction. The hollow body 17 of the air inlet plenum 3 can be entirely empty between the wall 29 and the opposing air outlet aperture 21.

According to some embodiments, the wall 29 can be provided with a port 31 which is closed by a removable closure 33, for maintenance purposes or inspection.

According to particularly advantageous embodiments, the connection flange 23 is comprised of a plurality of separable portions. In some exemplary embodiments the connection flange 23 is formed by two flange portions 23L and 23R. The two portions 23L, 23R of the connection flange 23 both develop around approximately 180° and are therefore substantially symmetrical with respect to a vertical plane containing the axis A-A of the gas turbine engine 6.

At least one, and preferably both flange portions 23L, 23R can be removable from the hollow body 17 of the air inlet plenum 3.

In some embodiments, each flange portion 23L, 23R is provided with two end ribs 35, which abut one against the other when the connection flange 23 is mounted on the hollow body 17 of the air inlet plenum 3. The ribs can extend radially from the flange portions and are adjacent the vertical plane which separates the two flange portions 23L, 23R.

Through holes 35H can be provided in both end ribs 35 of the two flange portion 23L, 23R. Connection bolts can be inserted through the through holes 35H to connect the two flange portions 23L, 23R to one another in the assembled condition.

Each flange portion 23L, 23R can further be provided with a semi-annular rim 37 for connection to a ring 39 constrained to the hollow body 17 and surrounding the air outlet aperture 21 thereof. In some embodiments connection bolts 40 are used to connect the two semi-annular rims 37 to the rig 39.

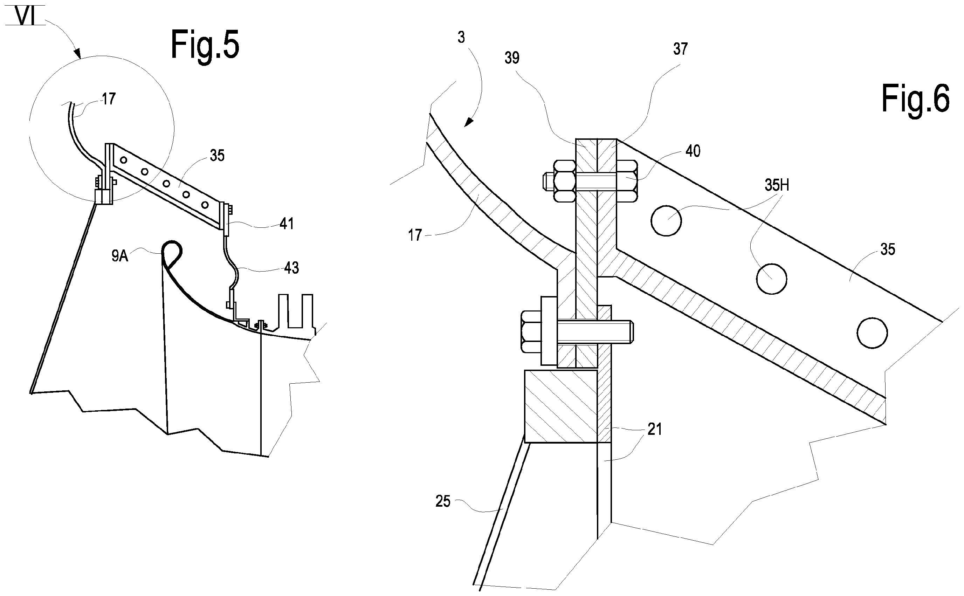

Both flange portions 23R, 23L can further be provided with respective semi-annular rims 41 arranged at the ends of the flange portions opposite the respective semi-annular rims 37. A sealing diaphragm 43 can be connected on the one side to the semi-annular rims 41 of the two flange portions 23L and 23R and on the other side to the annular inlet 9A of the air compressor 9, as best shown in Fig. 5. The sealing diaphragm 43 can be made of a flexible or resilient material, such as rubber or the like.

The above described structure of the air inlet plenum 3 simplifies the operations needed when parts of the gas turbine engine 6 must be removed, e. g. when the gas generator 7 is required to be removed from the power turbine 8, for maintenance or replacement purposes, for instance.

According to some embodiments of the gas turbine engine, in order to remove the gas generator 7 from the power turbine 8, the gas generator 7 must firstly be displaced axially to be distanced from the power turbine 8. Afterwards, the gas generator 7 can be removed with a transverse motion, i.e. moving it transversely to the axis A-A of the gas turbine engine 6.

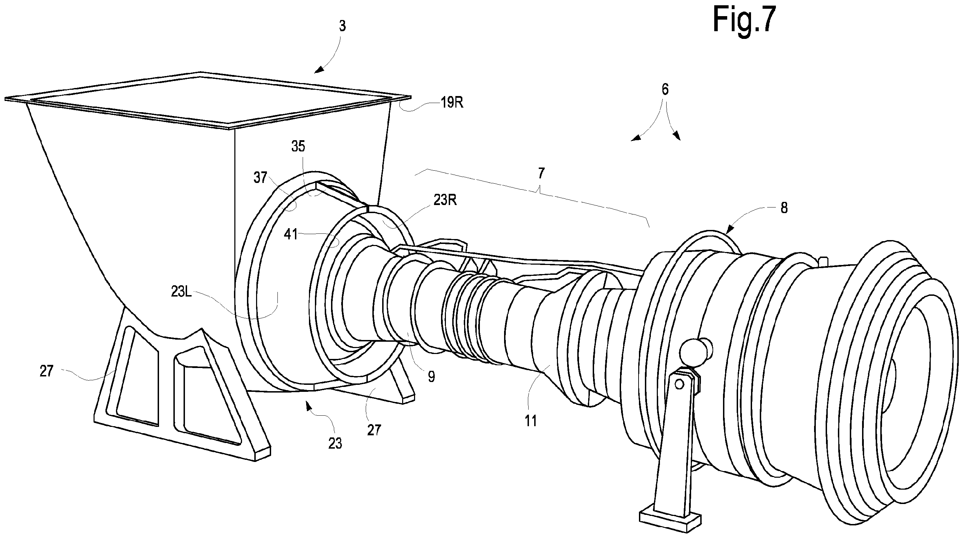

Using an air inlet plenum 3 as described above, the gas generator 7 can easily be removed from the turbine engine system 1 as follows. Figs. 7-10 illustrate a gas generator removal sequence. Starting from the assembled condition, firstly the sealing ring 43 is detached from the rims 41 of the two flange portions 23L and 23R (Fig.7).

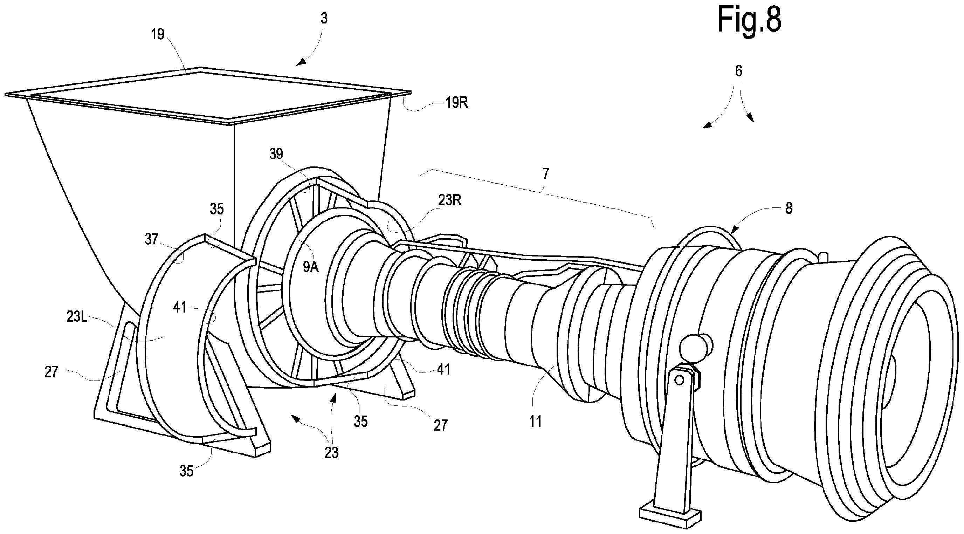

Afterwards, at least one of the two flange portions 23L and 23R can be removed from the main hollow body 17 of the air inlet plenum 3 (Fig.8). The flange portion which is removed is selected based on the layout of the gas turbine engine system 1 and more specifically depending upon on which side of the base plate 5 shall the gas generator 7 be removed from the system. In the exemplary embodiment illustrated in the drawings the flange portion 23L is removed.

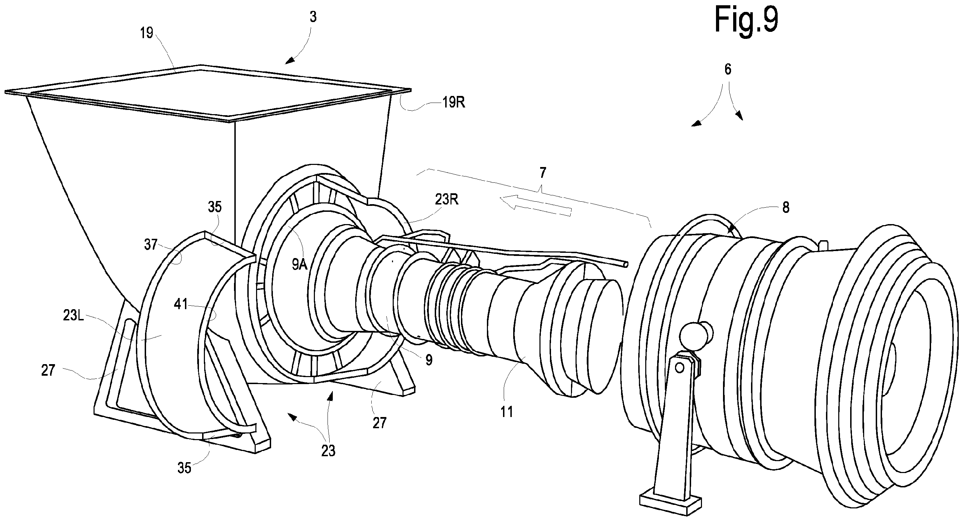

The gas generator 7 can thus be displaced axially, i.e. parallel to the axis A-A towards the interior of the air inlet plenum 3, to an extent sufficient for the gas generator 7 to be detached from the power turbine 8 (Fig.9). Displacement can be performed by means of a crane arranged in the turbine enclosure, not shown.

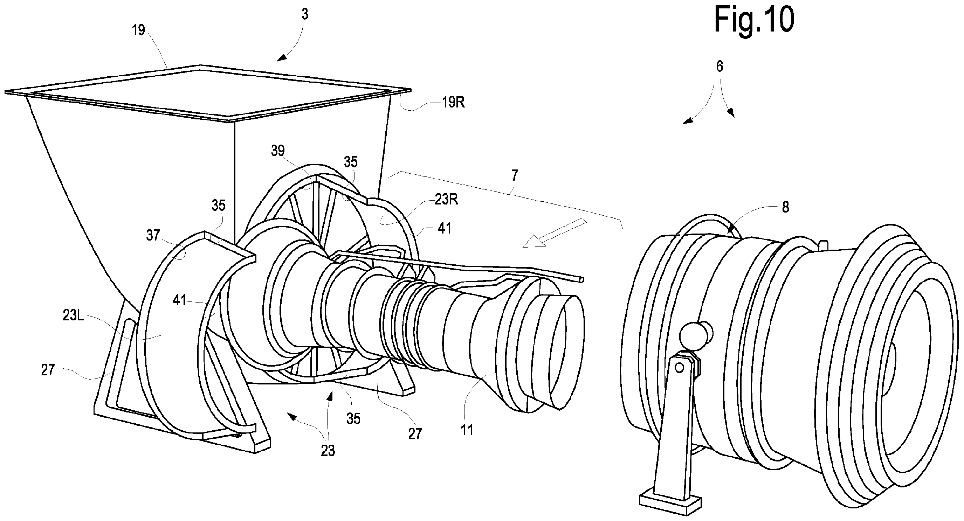

Once the gas generator 7 has been sufficiently distanced from the power turbine 8, it will be moved sideways orthogonal to the axis A-A (Fig.10). The sideways movement is allowed by the clearance obtained by removing the flange portion 23L. The remaining parts of the air inlet plenum 3 can remain in place.

If the gas generator 7 is to be moved away in the opposite direction transverse to the axis A-A, the flange portion 23R will be removed instead of the flange portion 23L. The remaining steps of the removal procedure described above remain the same.

In particularly advantageous embodiments, the air inlet plenum 3 is made of reinforced composite material. More specifically, according to preferred embodiments the air inlet plenum 3 is made of fiber-reinforced plastic composite material. Since the dynamic and static loads on the air inlet plenum 3 are relatively small, glass fiber-reinforced plastic composite material offer sufficient mechanical strength. Composite material using carbon fibers as reinforcing elements is not ruled out. However, it has been noticed that less expensive glass fiber-reinforced plastic (GFRP) provide sufficient mechanical strength at moderate costs.

More specifically, the hollow body 29 can be formed substantially entirely of fiber-reinforced plastic composite material. Only minor components, parts or inserts made of a different material, e.g. metal, can be provided. For example metal inserts can be embedded in the fiber-reinforced plastic material around the air inlet aperture 29 and the air outlet aperture 21. Metallic inserts can be provided, for example, in those locations where threaded holes or smooth through holes are required for connection purposes. Along the rim 19R metallic inserts can be embedded in a GFRP composite material forming the main body of the air inlet plenum. The metallic inserts can be provided with threaded or smooth blind or through holes for connection of the air inlet plenum to surrounding structures, e.g. the enclosure of the gas turbine system and/or the clean air delivery duct.

According to preferred embodiments, also the flange portions 23L and 23R are formed basically of fiber-reinforced plastic composite material, in particular preferably glass fiber-reinforced plastic composite material.

The flange portions 23L and 23R can be comprised of metallic inserts embedded in a fiber-reinforced plastic matrix for example along the semi-annular rims 37 and 41 as well as along the ribs 35, the metallic inserts forming for instance through holes provided for the connection bolts, which connect the two flange portions 23R, 23L to the ring 39 and the opposite facing rims 35 to one another.

Using fiber-reinforced plastic composite material has several advantages over steel construction as used in the current art air inlet plenums. On the one hand, the fiber-reinforced plastic composite material can be shaped according to any complex shape as required, for example for aerodynamic purposes. The curved shape of the wall 29 of the hollow body 17, for example, can be formed easily if a fiber-reinforced plastic is used, while it would be much more complex to manufacture in steel.

The hollow body 17 of the air inlet plenum 3 can be formed for example using a mold on which the various parts of the hollow body 17 are formed by a layer-by-layer deposition technique.

According to some embodiments, an open molding manufacturing process can be used, as Hand Lay Up processes which provide for layering reinforcing fibers in form of textures or chopped mat, and resin. According to further exemplary embodiments, open molding manufacturing processes such as Spray Up processes can be used, involving the deposition of plastic and fibers layers directly on the mold. Vacuum infusion can be applied if needed.. Open molding manufacturing processes are particularly suitable as they offer a good compromise between quality of the final article of manufacture and manufacturing costs.

In further exemplary embodiments, Resin Transfer Molding (RTM), or Compression Molding processes can be used depending on economic aspects related to production volume rate.

Supports 27 can be manufactured separately and attached subsequently to the hollow body 17. In other embodiments, the supports 27 can be formed along with the hollow body 17 in the same mold.

The flange portions 23L, 23R and the closure 33, if provided, are advantageously formed separately. The closure 33 can be provided with metallic inserts around the perimeter thereof, for connection to the hollow body 17 of the air inlet plenum 3, wherein the latter can be provided with a peripheral connection flange or rim surrounding the aperture closed by closure 33.

According to preferred embodiments, the actual structure of the air inlet plenum 3 can be different in the various parts thereof, for example a variable amount of fibers or a selective orientation thereof can be provided along different portions of the air inlet plenum 3 depending upon the mechanical properties which the air inlet plenum 3 has to satisfy. Improved resistance can be achieved for instance around the air inlet aperture 19 and the air outlet aperture 21 as well as along the corners or edges of the hollow body 17, e.g. providing a higher amount of fibers in those positions and/or a preferred orientation of those fibers along the line of force corresponding to the mechanical stresses generated during use.

Some particularly stressed parts or areas of the air inlet plenum 3 can be provided with a sandwich structure, i.e. a structure comprised of two outer skins made of fiber-reinforced plastic composite material, and an intermediate core arranged between the outer skins. This sandwich structure, known per se, increases the flexural strength of the structure. For example, the closure 33 can be provided with a sandwich structure as disclosed, to better resist flexural stresses due to the pressure difference between the interior and the exterior of the air inlet plenum 3, caused by the strong section operated by the air compressor 9.

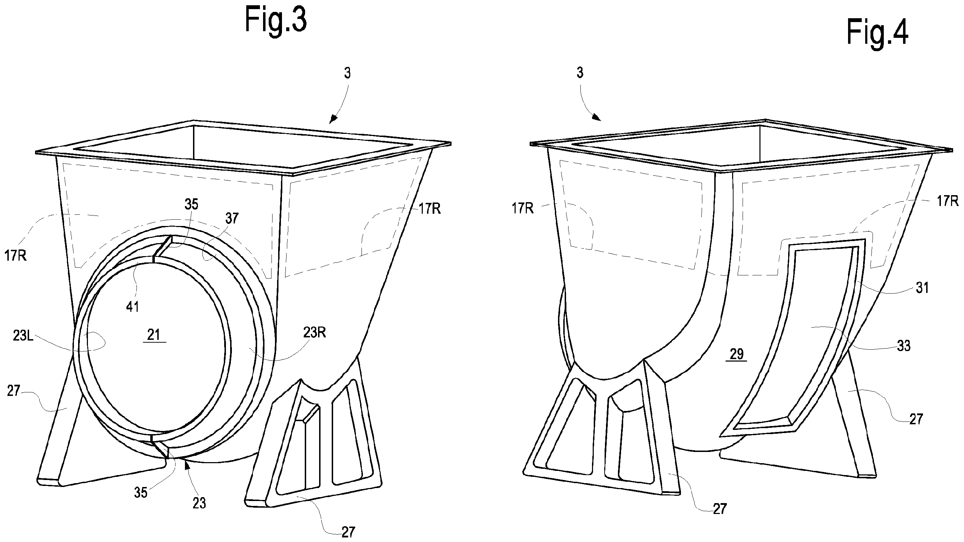

Also the upper area of the side walls of the hollow body 17, as shown schematically in dashed lines at 17R (see Figs. 3 and 4) can be partly or entirely made of a sandwich structure with an inner core improving the flexural resistance of those parts of the inlet plenum 3.

Reinforced parts of the inlet plenum, for example along the edges of the supports 27, can be obtained also by increasing the thickness of the fiber-reinforced plastic composite material.

While the disclosed embodiments of the subject matter described herein have been shown in the drawings and fully described above with particularity and detail in connection with several exemplary embodiments, it will be apparent to those of ordinary skill in the art that many modifications, changes, and omissions are possible without materially departing from the novel teachings, the principles and concepts set forth herein, and advantages of the subject matter recited in the appended claims.

## Claims

1. An air inlet plenum (3) for a gas turbine engine, comprising: a hollow body (17) having an air inlet aperture (19) and an air outlet aperture (21) arranged and configured for connection to the gas turbine engine; at least one removable portion (23L,23R), which is removable from the hollow body (17) when the air inlet plenum (3) is connected to a gas turbine engine (6);
**characterised in that**: the air inlet plenum (3) is at least partly made of fiber-reinforced plastic;
and said air outlet is provided with a connection flange (23) formed by at least two flange portions (23L, 23R), wherein at least one of said flange portions is removable from the hollow body (17) and forms said at least one removable portion of the air inlet plenum.

2. The air inlet plenum of claim 1, having a weight of less than 1000 kg.

3. The air inlet plenum of claim 1 or 2, wherein said at least one removable portion (23L, 23R) has a weight of 40 kg or less, and preferably of 20 kg or less.

4. The air inlet plenum of any preceding claim, wherein both said at least two flange portions (23L,23R) are removable from the hollow body.

5. The air inlet plenum of any preceding claim, wherein said connection flange is formed by two substantially symmetrical flange portions (23L, 23R), and wherein at least one of said two flange portions is removable from the hollow body.

6. The air inlet plenum of any of the preceding claims, wherein both said two flange portions (23L, 23R) are removable from the hollow body.

7. A gas turbine engine system comprising: a gas turbine engine (6), and an air inlet plenum (3); according to any one of the preceding claims.

8. The gas turbine engine system of claim 7, wherein the air inlet plenum (3) is designed and configured to generate an axial air inlet flow entering the gas turbine engine (6).

9. The gas turbine engine system of claim 7 or 8, wherein the gas turbine engine comprises an air compressor provided with an annular inlet for receiving air from the air inlet plenum (3), and wherein the annular inlet projects in the air inlet plenum.

10. The gas turbine engine system of any of claims 7 to 9, wherein the connection flange (23) surrounds the annular inlet of the air compressor.

11. The gas turbine engine system of any of claims 7 to 10, wherein the dimension of the removable flange portion (23L, 23R) and the mutual position of the connection flange and of the annular inlet of the air compressor are such that the gas turbine engine or part thereof can be removed from the air inlet plenum (3) by removing the removable flange portion (23L, 23R) and without dismantling the air inlet plenum (3).

12. The gas turbine engine system of any of claims 7 to 11, wherein the two flange portions are substantially symmetrical and connected to one another along a plane containing an axis of the compressor.

## Patentansprüche

1. Luftansaugkammer (3) für einen Gasturbinenmotor, umfassend: einen Hohlkörper (17), der eine Lufteinlassöffnung (19) und eine Luftauslassöffnung (21) aufweist, die zur Verbindung mit dem Gasturbinenmotor angeordnet und konfiguriert sind; mindestens einen entfernbaren Abschnitt (23L, 23R), der von dem Hohlkörper (17) entfernbar ist, wenn die Luftansaugkammer (3) mit einem Gasturbinenmotor (6) verbunden ist; **dadurch gekennzeichnet, dass:** die Luftansaugkammer (3) mindestens teilweise aus faserverstärktem Kunststoff hergestellt ist; und der Luftauslass mit einem Verbindungsflansch (23) versehen ist, der durch mindestens zwei Flanschabschnitte (23L, 23R) gebildet ist, wobei mindestens einer der Flanschabschnitte von dem Hohlkörper (17) entfernbar ist und den mindestens einen entfernbaren Abschnitt der Luftansaugkammer bildet.

2. Luftansaugkammer nach Anspruch 1, die ein Gewicht von weniger als 1000 kg aufweist.

3. Luftansaugkammer nach Anspruch 1 oder 2, wobei der mindestens eine entfernbare Abschnitt (23L, 23R) ein Gewicht von 40 kg oder weniger und vorzugsweise von 20 kg oder weniger aufweist.

4. Luftansaugkammer nach einem der vorstehenden Ansprüche, wobei die beiden mindestens zwei Flanschabschnitte (23L, 23R) von dem Hohlkörper entfernbar sind.

5. Luftansaugkammer nach einem der vorstehenden Ansprüche, wobei der Verbindungsflansch durch zwei im Wesentlichen symmetrische Flanschabschnitte (23L, 23R) gebildet ist und wobei mindestens einer der beiden Flanschabschnitte vom Hohlkörper entfernbar ist.

6. Luftansaugkammer nach einem der vorstehenden Ansprüche, wobei die beiden Flanschabschnitte (23L, 23R) von dem Hohlkörper entfernbar sind.

7. Gasturbinenmotorsystem, umfassend: einen Gasturbinenmotor (6) und eine Luftansaugkammer (3); nach einem der vorstehenden Ansprüche.

8. Gasturbinenmotorsystem nach Anspruch 7, wobei die Luftansaugkammer (3) ausgelegt und konfiguriert ist, um eine axiale Lufteinlassströmung zu erzeugen, die in den Gasturbinenmotor (6) eintritt.

9. Gasturbinenmotorsystem nach Anspruch 7 oder 8, wobei der Gasturbinenmotor einen Luftkompressor umfasst, der mit einem ringförmigen Einlass zum Aufnehmen von Luft aus der Luftansaugkammer (3) versehen ist, und wobei der ringförmige Einlass in die Luftansaugkammer vorsteht.

10. Gasturbinenmotorsystem nach einem der Ansprüche 7 bis 9, wobei der Verbindungsflansch (23) den ringförmigen Einlass des Luftkompressors umgibt.

11. Gasturbinenmotorsystem nach einem der Ansprüche 7 bis 10, wobei die Abmessung des entfernbaren Flanschabschnitts (23L, 23R) und die gegenseitige Position des Anschlussflansches und des ringförmigen Einlasses des Luftkompressors derart sind, dass der Gasturbinenmotor oder ein Teil davon von der Luftansaugkammer (3) durch Entfernen des entfernbaren Flanschabschnitts (23L, 23R) und ohne Demontage der Luftansaugkammer (3) entfernt werden kann.

12. Gasturbinenmotorsystem nach einem der Ansprüche 7 bis 11, wobei die beiden Flanschabschnitte im Wesentlichen symmetrisch und entlang einer Ebene, die eine Achse des Kompressors enthält, miteinander verbunden sind.

## Revendications

1. Caisson de distribution d'entrée d'air (3) pour un moteur de turbine à gaz, comprenant : un corps creux (17) possédant une ouverture d'entrée d'air (19) et une ouverture de sortie d'air (21) agencé et configuré pour être raccordé au moteur de turbine à gaz ; au moins une partie amovible (23L, 23R) qui peut être retirée du corps creux (17) lorsque le caisson de distribution d'entrée d'air (3) est raccordé à un moteur de turbine à gaz (6) ; **caractérisé en ce que :** le caisson de distribution d'entrée d'air (3) est au moins partiellement en plastique renforcé par des fibres ; et ladite sortie d'air est pourvue d'une bride de raccordement (23) formée par au moins deux parties de bride (23L, 23R), dans lequel au moins l'une desdites parties de bride peut être retirée du corps creux (17) et forme ladite au moins une partie amovible du caisson de distribution d'entrée d'air.

2. Caisson de distribution d'entrée d'air selon la revendication 1, ayant un poids inférieur à 1 000 kg.

3. Caisson de distribution d'entrée d'air selon la revendication 1 ou 2, dans lequel ladite au moins une partie amovible (23L, 23R) a un poids de 40 kg ou moins, et de préférence de 20 kg ou moins.

4. Caisson de distribution d'entrée d'air selon une quelconque revendication précédente, dans lequel lesdites au moins deux parties de bride (23L, 23R) peuvent être retirées du corps creux.

5. Caisson de distribution d'entrée d'air selon une quelconque revendication précédente, dans lequel ladite bride de raccordement est formée par deux parties de bride (23L, 23R) sensiblement symétriques, et dans lequel au moins l'une desdites deux parties de bride peut être retirée du corps creux.

6. Caisson de distribution d'entrée d'air selon l'une quelconque des revendications précédentes, dans lequel lesdites deux parties de bride (23L, 23R) peuvent être retirées du corps creux.

7. Système de moteur de turbine à gaz comprenant : un moteur de turbine à gaz (6) et un caisson de distribution d'entrée d'air (3) ; selon l'une quelconque des revendications précédentes.

8. Système de moteur de turbine à gaz selon la revendication 7, dans lequel le caisson de distribution d'entrée d'air (3) est conçu et configuré pour générer un écoulement d'entrée d'air axial entrant dans le moteur de turbine à gaz (6).

9. Système de moteur de turbine à gaz selon la revendication 7 ou 8, dans lequel le moteur de turbine à gaz comprend un compresseur d'air pourvu d'une entrée annulaire pour recevoir de l'air provenant du caisson de distribution d'entrée d'air (3), et dans lequel l'entrée annulaire fait saillie dans le caisson de distribution d'entrée d'air.

10. Système de moteur de turbine à gaz selon l'une quelconque des revendications 7 à 9, dans lequel la bride de raccordement (23) entoure l'entrée annulaire du compresseur d'air.

11. Système de moteur de turbine à gaz selon l'une quelconque des revendications 7 à 10, dans lequel la dimension de la partie de bride amovible (23L, 23R) et la position mutuelle de la bride de raccordement et de l'entrée annulaire du compresseur d'air sont telles que le moteur de turbine à gaz ou une partie de celui-ci peut être retirée du caisson de distribution d'entrée d'air (3) en retirant la partie de bride amovible (23L, 23R) et sans démonter le caisson de distribution d'entrée d'air (3).

12. Système de moteur de turbine à gaz selon l'une quelconque des revendications 7 à 11, dans lequel les deux parties de bride sont sensiblement symétriques et reliées l'une à l'autre le long d'un plan contenant un axe du compresseur.
